# EUROPEAN PATENT SPECIFICATION

(11) **EP 2 203 662 B1**
(45) Date of publication and mention of the grant of the patent: **29.08.2012**
(21) Application number: 08832957.8
(22) Date of filing: 25.09.2008
(51) Int. Cl.: F16G 1/28

(54) **Use of a toothed belt having a resistant layer in direct contact with oil**
Verwendung eines Zahnriemens mit einer verschleissfesten Schicht in direktem Kontakt mit Öl
Utilisation d'une courroie dentée ayant une couche résistante en contact direct avec de l'huile

(30) Priority: 26.09.2007 IT TO20070676
(43) Date of publication of application: 07.07.2010
(73) Proprietor: DAYCO EUROPE S.r.l., 66100 Chieti (IT)
(72) Inventor: BALDOVINO, Carlo, I-65125 Pescara (IT); ROLANDO, Adriano, I-10087 Valperga Canavese (IT)
(74) Representative: Fiussello, Francesco
(86) International application number: PCT/IB2008/002508
(87) International publication number: WO 2009/040647

(56) References cited:
- EP-A2- 1 052 425
- EP-A2- 1 637 767
- WO-A1-2005/080821
- WO-A1-2009/034422
- US-B1- 6 352 488

## Description

### TECHNICAL FIELD

The present invention relates to the use of a toothed belt having a resistant layer in according to claim 1.

### BACKGROUND ART

Each component of the belt contributes to increasing the performance in terms of mechanical resistance, so as to decrease the risk of failure of the belt and to increase the specific transmissible power.

Cords especially contribute to ensuring the required mechanical characteristics for the belt and substantially contribute to the modulus of the belt itself and therefore specifically ensure the maintenance of the performance of the belt in the course of time. Cords are generally formed by twisting high-modulus fibres several times.

Cords are also normally treated with substances adapted to increase the compatibility of the fibres with the body compound that surrounds the cords themselves.

For example, the cords may be treated with elastomeric latexes that serve as "adhesives".

The body compound allows connecting the various elements and must have appropriate hardness and ensure that the various elements forming the belt itself synergically contribute to the final performance of the belt itself.

The body compounds contain one or more elastomeric materials possibly enriched with fibres to increase the hardness thereof. The coating fabric of the belts increases the resistance to abrasion and hence protects the working surface of the belt from wear due to rubbing between the sides and the tops of the belt teeth and the sides and the bottoms of the races of the pulley with which the belt interacts.

Furthermore, the coating fabric reduces the coefficient of friction on the working surface, reduces the deformability of the teeth and especially reinforces the root of the tooth thereby avoiding the failure thereof.

The coating fabric used may consist of a single layer or, alternatively, may be double-layered so as to ensure a greater sturdiness and stiffness.

The fabric is normally treated with an adhesive, for example resorcinol and formaldehyde latex (RFL) to increase adherence between the body and the fabric itself (see WO 2005/080821 A1).

Moreover, a number of methods are employed to increase the resistance to wear of drive belts by modifying the structure of the coating fabric or performing different treatments on the fabric, for example, treatments where the fabric is treated with halogenated polymers, for example PTFE treatments.

Said treatments do not, however, lead to any great increase in resistance to wear as the coating fabric of the toothed belt, in use, represents in any case the working surface and is therefore exposed to wear.

Patent applications JP2001304343 and JP2001208137 to MITSUBOSHI disclose examples of treatments, also designated as adhesive compositions, for toothed belt fabrics including an anti-friction material selected from the group consisting of molybdenum sulphide and graphite. Said treatments are applied to the threads of the fabric as a glue and do not form a separate layer.

Therefore, also in these cases the fabric is the actual working surface of the toothed belt, i.e. the surface that in use is in direct contact with the pulleys, and therefore also in this case the treatment allows to obtain only a slight increase of the resistance to abrasion and the belt is also very noisy, especially in the step of engaging the pulley.

To overcome such a problem it has been suggested to radically change the structure of the belt in patent EP1157813 in the name of the same applicant, where it is suggested to cover the coating fabric with a resistant layer comprising a fluorinated plastomer, an elastomeric material and a vulcanisation agent. The fluorinated plastomer is present in the resistant layer in a larger amount with respect to the elastomeric material so as to greatly facilitate the formation of an actual layer which is separate from the fabric.

The layer is distinct from the fabric, it does not permeate in the fabric and is advantageously applied to the fabric by means of a calendaring step. An adhesive layer is advantageously present between the fabric and the resistant layer.

The use of the resistant layer has allowed to obtain good results in terms of the increase in the resistance to wear, as the working surface of the belt is in this case formed by the resistant layer itself and not by the fabric, which has shown to be particularly resistant to wear and provides for a lower noisiness during the step of engaging the teeth of the belt on the pulley.

Alternative solutions are continuously sought for obtaining a covering layer for toothed belts allowing to provide a high resistance to wear in the whole range of operating temperatures of the belt and a low noisiness at low and high speeds at the same time.

Another example of a toothed belt that comprises a covering layer is disclosed in US 6,352,488 B1.

### DISCLOSURE OF THE INVENTION

It is the object of the present invention to provide the use of a toothed belt according to claim 1, wherein the belt is provided with a high resistance to wear and at the same time both a low noisiness during operation at high and low speeds and in the whole range of use temperatures.

### BRIEF DESCRIPTION OF THE DRAWINGS

For a better understanding of the present invention, it is now also described with reference to the accompanying figures, in which:
- Figure 1 is a partial perspective view of a toothed belt according to the present invention;
- Figure 2 is a diagram of a first timing control system using a first toothed belt according to the present invention;
- Figure 3 is a diagram of a second timing control system using a second toothed belt according to the present invention;
- Figure 4 is a diagram of a third timing control system using a third toothed belt according to the present invention;
- Figure 5 is a Table with the results of the tests performed on the treatments according to the invention and according to the known art.

### DETAILED DESCRIPTION

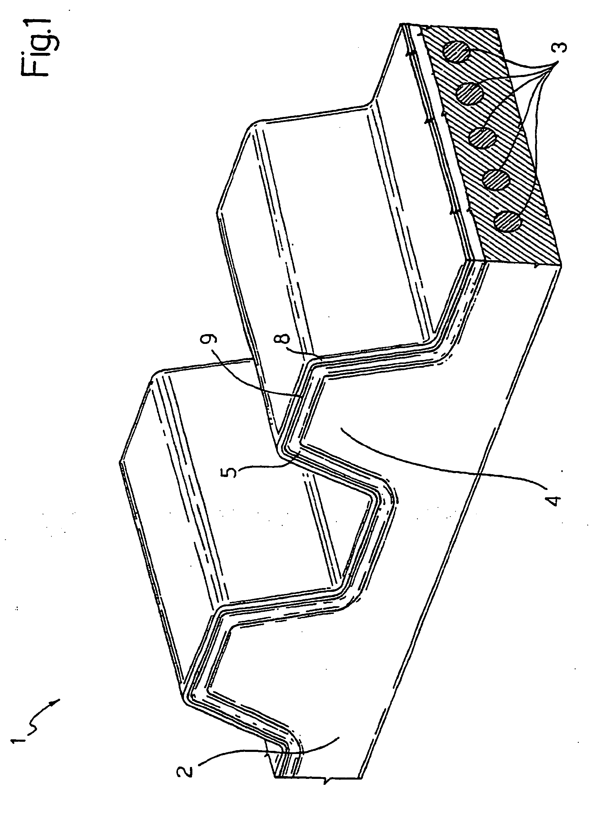

Figure 1 shows a toothed belt 1 as a whole. The belt 1 comprises a body 2 made of elastomeric material, in which a plurality of longitudinal filiform resistant inserts 3 is imbedded.

The body 2 has a toothing 4, which is coated by means of a coating fabric 5.

The body 2 is advantageously made of a compound consisting of one or more elastomers, which are for convenience indicated as a whole as "first elastomeric material". The "first elastomeric material substantially contains" one or more copolymers formed from a nitrile group-containing monomer and a diene in which the nitrile group-containing monomers are preferably in a percentage in the range between 30 and 39% in weight with respect to total final copolymers.

The "first elastomeric material substantially contains" means that small percentages of other polymers or copolymers may be added to the first elastomeric material without negatively affecting the chemical compatibility between the body compound and the other components of the toothed belt and therefore without departing from the scope of the present invention.

The copolymer/s used advantageously is/are hydrogenated butadiene acrylonitrile or HNBR.

Advantageously, the HNBR used has a high degree of hydrogenation, for example so-called totally saturated HNBRs - thus having a residual percentage of double bonds of 0.9% at most - may be used, although HNBRs with a lower degree of unsaturation - such as for example HNBRs with a degree of saturation of 4% or 5.5%, so-called partially saturated HNBRs - may be used as an alternative.

Some examples of HNBR copolymers that may be used as body compound, but also in different treatments of the various components of the toothed belt, are copolymers included in the family of THERBAN produced by Lanxess, such as THERBAN 3407 with 34% of nitrile groups and a degree of hydrogenation of at most 0.9%, THERBAN 3406 with 34% of nitrile groups and a degree of unsaturation of at most 0.9%, THERBAN 3607 with 36% of nitrile groups and a degree of unsaturation of at most 0.9%, THERBAN 3446 with 34% of nitrile groups and a degree of unsaturation of at most 4%, THERBAN 3447 with 34% of nitrile groups and a degree of unsaturation of at most 5.5 %, THERBAN 3627 with 36% nitrile groups and a degree of unsaturation of at most 2%, THERBAN 3629 with 36% of nitrile groups and a degree of unsaturation of at most 2%, THERBAN 3907 with 39% of nitrile groups and a degree of unsaturation of at most 0.9%.

HNBRs produced by Nippon Zeon by the name ZETPOL may also be used as an alternative. In particular ZETPOL 2000 with 36% of nitrile groups and a degree of unsaturation of at most 0.9%, ZETPOL 2000L with 36% of nitrile groups and a degree of unsaturation of at most 0.9%, ZETPOL 2010 with 36% of nitrile groups and a degree of unsaturation of at most 4%, ZETPOL 2010L with 36% of nitrile groups and a degree of unsaturation of at most 4%, ZETPOL 2010H with 36% of nitrile groups and a degree of unsaturation of at most 4%, ZETPOL 2020 with 36% of nitrile groups and a degree of unsaturation of at most 5.5%, ZETPOL 2020L with 36% of nitrile groups and a degree of unsaturation of at most 5.5%.

The compound in the first elastomeric material may contain other conventional additives such as, for example, reinforcing agents, fillers, pigments, stearic acid, accelerators, vulcanisation agents, antioxidants, activators, initiators, plasticisers, waxes, prevulcanisation inhibitors, anti-degrading agents, process oils and the like.

Advantageously, carbon black may be used as a filler, advantageously added in amounts in the range between 0 and 80 phr, more advantageously approximately 40 phr. Advantageously, reinforcing white fillers such as talc, calcium carbonate, silica and silicates are advantageously added in an amount in the range between 0 and 80 phr, advantageously approximately 40 phr. Silanes may also advantageously be used in an amount in the range between 0 and 5 phr.

Advantageously, zinc oxide and magnesium oxide are added in an amount advantageously in the range between 0 and 15 phr.

Advantageously, ester plasticisers such as trimellitates or ether esters are added in an amount advantageously in the range between 0 and 20 phr.

Vulcanisation coagents such as triallylcyanurates, organic or inorganic methacrylates such as metal salts are advantageously added in an amount advantageously in the range between 0 and 20 phr or organic peroxides such as for example isopropyl benzene peroxide in an amount advantageously in the range between 0 and 15 phr.

The elastomeric material compound advantageously further comprises reinforcing fibres, more advantageously in an amount between 2 and 40 phr, even more advantageously 20 phr. The reinforcing fibres advantageously have a length in the range between 0.1 and 10 mm.

The use of fibres allows to further enhance the mechanical characteristics of the body compound.

The reinforcing fibres advantageously comprise aromatic polyamides, advantageously paramides, for example Technora^{©} fibres, which may adhere to the compound by means of a resorcinol and formaldehyde latex (RFL) treatment, may advantageously be used. For example, the latex used may comprise a vinylpyridine-styrene-butadiene copolymer (VP-SBR).

Aramidic fibres have shown to be especially effective, such as for example Teijn's 1 mm-long Technora fibres.

The coating fabric 5 of the toothing 4 or the coating fabric 7 of the back 6 may comprise one or more layers and may, for example, be obtained by means of different weaving techniques, for example by means of the weaving technique known as 2x2 twill.

As an alternative, the coating fabric 5 may be obtained according to weaving modes allowing to obtain at least one rough surface to improve mechanical adhesion.

The coating fabric 5 of the teeth advantageously comprises aliphatic or aromatic polyamide, more advantageously aromatic polyamide (aramid).

The fabric used advantageously has a composite structure consisting of a weave and a warp, in which the weave consists of weave threads each formed by an elastic thread as a core and by at least one pair of composite threads wound on the elastic thread, each composite thread comprises a high thermal and mechanical resistance thread and at least one covering thread wound on the high thermal and mechanical resistance thread. Each composite thread advantageously includes a high thermal and mechanical resistance thread and a pair of covering threads wound on the high thermal and mechanical resistance thread. The elastic thread is advantageously polyurethane. The high thermal and mechanical resistance thread is advantageously made of para-aromatic polyamide.

Before forming the belt, the fabric 5 is treated by immersion in an aqueous solution of organic solvent or a mixture of water and solvent containing a composition comprising a second elastomeric material consisting of one or more copolymers formed from a nitrile group-containing monomer and a diene in which the nitrile group-containing monomers are advantageously in a percentage in the range between 30 and 39% in weight with respect to total final copolymers.

The fabric 5 advantageously consists of a polymer material, advantageously aliphatic or aromatic polyamide, even more advantageously high thermal resistance and high toughness polyamide 6/6.

According to the present invention a covering layer also designated as resistant layer 8 is placed over the fabric 5 and externally thereto.

The resistant layer 8 comprises a second elastomeric material and an anti-friction material.

The resistant layer 8 further comprises a peroxide such as a vulcanisation agent. The peroxide is normally added in an amount in the range between 1 and 15 parts in weight with respect to 100 parts of elastomeric material. More advantageously, the peroxide is added in an amount in the range between 5 and 10 parts with respect to 100 parts of elastomeric material.

The toothed belt 1 is vulcanised according to common and known methods and therefore not disclosed in detail.

Advantageously, the anti-friction material is selected from the group consisting of molybdenum sulphide, graphite, copper powder, although similar anti-friction materials and materials allowing to maintain the same characteristics may not be excluded.

The anti-friction material is more advantageously molybdenum sulphide.

Particularly optimal results in terms of resistance to wear have been obtained without problems arising from the excessive rigidity of the resistant layer itself, by adding percentages in the range between 0.01 phr and 65 phr in weight with respect to the weight of the second elastomeric material. Advantageously in the range between 0.1 phr and 50 phr.

More advantageously percentages in the range between 1 and 30 phr, even more advantageously between 5 and 15 phr are added.

In the case in which the anti-friction material is molybdenum sulphide the optimal percentages are in the range between 5 and 10 phr.

The anti-friction material may be added to the elastomeric material in the form of masterbatch consisting of the anti-friction material previously mixed with 50% of an elastomer that may be the same or different from the second elastomeric material that forms the resistant layer 8.

According to the present invention, the second elastomeric material comprises one or more copolymers formed from a nitrile group-containing monomer and a diene in which the nitrile group-containing monomers are in a percentage preferably in the range between 30 and 39% in weight with respect to total final copolymers. The nitrile groups are more advantageously in a percentage in the range between 34 and 36% in weight with respect to total final copolymers.

In addition to the second elastomeric material and to the anti-friction material, the resistant layer also comprises common additives for elastomers such as for instance carbon black.

The second elastomeric material may contain impurities or percentages of another elastomeric material or other material without these substantially varying the resistance to wear of the resistant layer.

According to the present invention at least one of the copolymers is modified with a zinc salt of an unsaturated carboxylic acid.

The second elastomeric material is advantageously HNBR or XHNBR, more advantageously modified with a zinc methacrylate also designated as zinc salt of polymethacrylate acid.

HNBR modified with zinc salts advantageously has a Mooney viscosity in the range between 70 and 90, more advantageously between 80 and 90.

HNBR modified with zinc salts advantageously has an unsaturation lower than 15 per cent, more advantageously between 5 and 10%.

For example, elastomers are advantageously used which are sold by Zeon with the names: ZSC 1295, ZSC 2095, ZSC 2195, ZSC 2295, ZSC 2295L, ZSC 2295R and ZSC 2395.

Particularly optimal results have been obtained when the second elastomeric material only consists of a single HNBR modified with a zinc salt of an unsaturated carboxylic acid.

The second elastomeric material is more advantageously ZSC 2195.

The thickness of the resistant layer 8 is advantageously in the range between 0.02 mm and 4 mm. Especially good results have been achieved by using resistant layers having a thickness in the range between 1 and 2.5 mm.

The resistant layer 8 may be placed over the fabric 5 in different manners. It is advantageously placed by means of a calendering step.

According to the known art disclosed in patent EP1157813, an adhesive material may be placed between the fabric 5 and the resistant layer 8 to improve the adhesion of the resistant layer 8 on the fabric 5.

The resistant layer 8 advantageously has a weight in the range between 50 and 80 g/m² to ensure the required resistance.

The resistant inserts 3 are for instance made of high resistance glass fibres, although they may also be aramidic fibres or high modulus fibres, for instance PBO or carbon fibres. Furthermore, cords of the "hybrid" type may also be used, i.e. including threads made of different materials, advantageously selected among those previously mentioned.

The cord is advantageously made of high modulus glass fibres, for instance in a 22.5 3x18 configuration.

The fibres forming the cord are advantageously treated with an HNBR latex vulcanised with hydrosoluble peroxides by means of the process disclosed in patent WO2004057099 to Nippon Glass.

Therefore, the treatment advantageously comprises a treatment liquid consisting of an aqueous adhesive. i.e. comprising more that 50% water, comprising an elastomeric material latex and a vulcanisation adjuvant.

The latex advantageously comprises a third elastomeric material comprising a mixture of one or more copolymers formed from a nitrile group-containing monomer and a diene in which the nitrile group-containing monomers are in a percentage in the range between 30 and 39% in weight with respect to total final copolymers. The nitrile group-containing monomers are more advantageously in a percentage in the range between 30 and 32 % in weight with respect to total final copolymers.

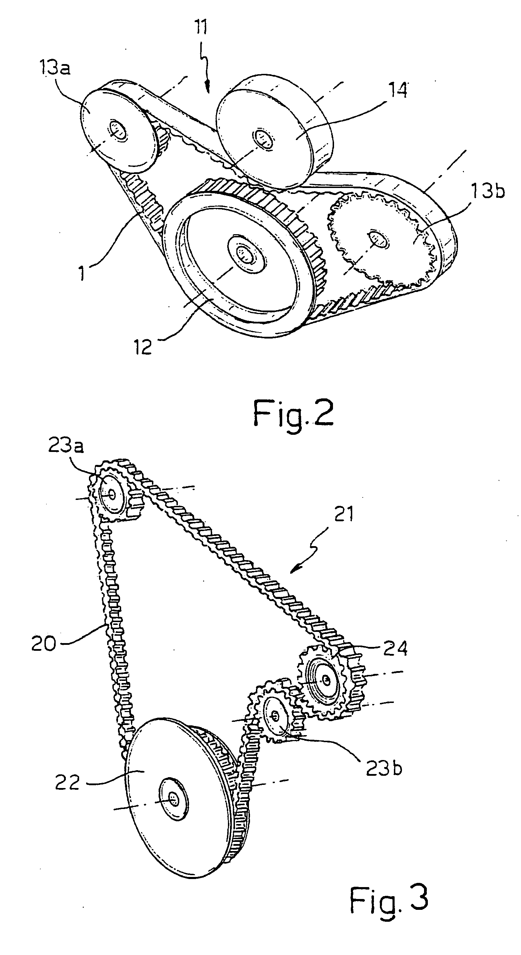

The belt 1 may be used, for instance, in a timing control system for a motor vehicle of the type shown in Figure 2. The timing control system is indicated in the Figure as a whole by numeral 11 and comprises a driving pulley 12 rigidly fixed to the drive shaft (not shown), a first and a second driven pulley (13a, 13b) and a tensioner 14 for the tensioning of the toothed belt.

According to a second alternative embodiment, shown in Figure 3, numeral 20 shows a toothed belt according to the present invention, which has a toothing on both faces and therefore displays a resistant fabric that covers both toothings.

The toothed belt 20 may be used, for instance, in a timing control system for a motor vehicle of the type shown in Figure 3. The timing control system is indicated in the Figure as a whole by numeral 21 and comprises a driving pulley 22 rigidly fixed to the drive shaft (not shown), a first, a second pulley and a third driven pulley (23a, 23b, 24).

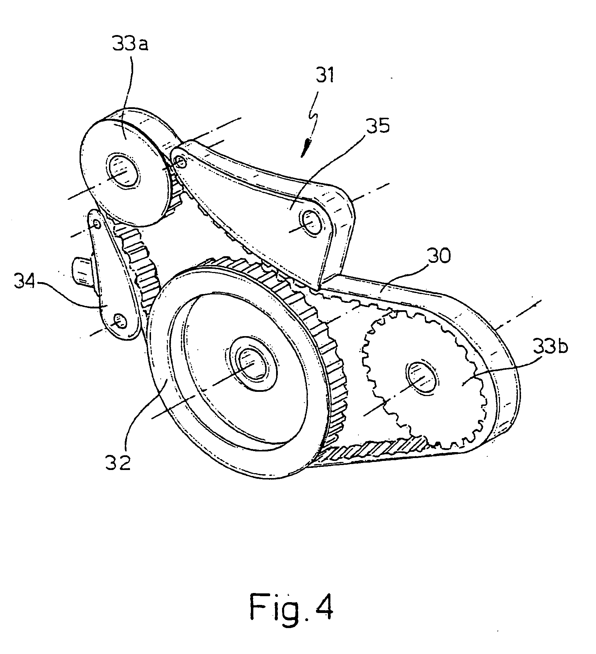

According to a third embodiment of the present invention, shown in Figure 4, a toothed belt 30 according to the present invention may advantageously be used in a timing control system shown as a whole as numeral 31 in the Figure and comprising a driving pulley 32 rigidly fixed to the drive shaft (not shown), a first and a second driven pulley (33a, 33b), a shoe tensioner 34 and a shoe 35.

In use, the toothed belts 1, 20 and 30 in the respective control systems 11, 21 and 31 are in direct contact with the oil.

Figures 2 and 4 refer to control systems relative to the handling of balance countershafts, although it is clear that the toothed belt according to the present invention may also be used in so-called "cam to cam" systems or for the handling of the oil pump. In these cases, in use, the belt results partially immersed in an oil bath.

Furthermore, the belt according to the present invention may also be used in the main drive for the handling of the cams and also for the handling of the injection pump in diesel engines.

It has experimentally been verified that the treatment for a fabric according to the present invention represents an effective barrier to oil and therefore enables the tooth belts to pass the duration tests which they undergo for use in motor vehicles therefore avoiding all the problems of the known toothed belts when used in contact with oil, in particular reduction of the mechanical characteristics, reduced adhesion, less efficient meshing and less resistance to wear.

From an analysis of the characteristics of the toothed belt made according to the present invention, the advantages it allows to obtain are apparent.

Specifically, optimal results have been achieved in the case in which the belt is used instead of the traditional gear or chain systems inside the block, systems in which the belt is exposed for its whole lifetime to a continuous contact with oil splashes or possibly even partially immersed in an oil bath.

It has experimentally been verified that the combination of the use of the resistant layer 8 according to the invention enables the tooth belts to pass the duration tests which they undergo for use in motor vehicles therefore avoiding all the problems of the known toothed belts when used in contact with oil, in particular reduction of the mechanical characteristics, reduced adhesion, less efficient meshing and less resistance to wear.

Specifically, it has unexpectedly been found that, when a coating fabric of a toothed belt is covered with a resistant layer according to the present invention, the resistance to wear of the toothed belt is optimal and, at the same time, during operation the toothed belt has low noise level both at high and low speeds and in the whole range of operating temperatures.

Furthermore, it has been unexpectedly found that the selection of an anti-friction material for a resistant layer 8 other than that used in the known art allows to obtain the same characteristics of resistance to wear or the appropriate selection of the use percentages allows the characteristics of resistance to wear to remain unaltered.

Furthermore, while the fluorinated plastomer was added in the resistant layer in an amount greater that the elastomer, it has been unexpectedly verified that appropriate anti-friction materials may be selected, which may be added in an amount greatly lower than that of the elastomer.

In this manner, clear advantages are obtained in terms of costs, thus obtaining at the same time a mixture which is easily mixable and processable.

Furthermore, in virtue of the improved properties of the resistant layer 8 according to the present invention and, specifically, of the anti-friction material used, a smaller amount of expensive antifriction material is used and a thinner resistant layer 8 is applied, although the mechanical and wear resistance characteristics are maintained. Great advantages in terms of overall costs of the resistant layer are therefore obtained.

The manufacturing process of the belt is therefore improved.

The toothed belt that is used in the present invention will now also be described by means of examples without because of this being limited thereto.

### EXAMPLES 1-9

Table 1 shows the characteristics of an elastomeric material in a resistant layer 8 according to the present invention.

**Table 1**

| | |
|---|---|
| ZEOFORTE ZSC 2195 H | |
| Bound acrylonitrile in weight % | 36 |
| Mooney viscosity MS 1+4 ml 100°C | 88 |
| Specific gravity | 1.24 (g/cm³) |
| Iodine value | 28 |

Table 2 shows the chemical composition of some examples of a resistant layer 8 made according to the present invention. In all examples, the anti-friction material has been mixed with 100 phr of Zeoforte ZSC 2195, the characteristics of which are shown in Table 1 to form a resistant covering layer of the fabric of the belt.

**Table 2**

| Ex. | | Anti-friction material |
|---|---|---|
| 1 | Comparative | Fluorinated plastomer |
| | example | - 125 phr |
| 2 | Layer according | Molybdenum sulphide |
| | to the invention | - 62.5 phr |
| 3 | Layer according | Molybdenum sulphide |
| | to the invention | - 30 phr |
| 4 | Layer according | Graphite |
| | to the invention | - 62.5 phr |
| 5 | Layer according | Graphite |
| | to the invention | - 30 phr |
| 6 | Layer according | Graphite |
| | to the invention | - 10 phr |

### EXAMPLE 4

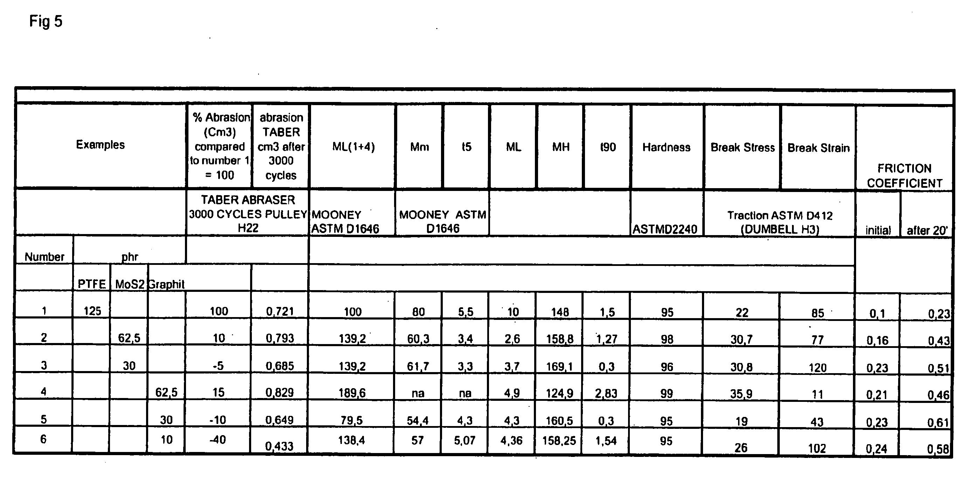

Figure 5 shows the results of the tests carried out on the resistant layers according to the invention and comparative with respect to the known art in which the only difference between the belts undergoing the tests is the composition of the anti-friction material as shown in Table 2.

## Claims

1. The use of a toothed belt in direct contact with oil or partially immersed in oil, said toothed belt (1) comprising a body (2) made of a first elastomeric material formed by a mixture of one or more copolymers, obtained from a dien monomer and a nitrile group-containing monomer, and a plurality of teeth (4); said teeth being coated by a fabric (5); said fabric being covered by a resistant layer (8), said resistant layer (8) totally adhering to the fabric and forming in use the working surface of the toothed belt and **characterised in that** said resistant layer (8) comprises a second elastomeric material formed by a mixture of one or more copolymers, obtained from a dien monomer and a nitrile group-containing monomer, a vulcanisation agent and an anti-friction material; said anti-friction material being selected from the group consisting of molybdenum sulphide, graphite, copper powder.

2. Use according to claim 1, **characterised in that** said anti-friction material is present in an amount up to 100 phr.

3. Use according to claim 1, **characterised in that** said anti-friction material is present in an amount in the range between 2 and 30 phr.

4. Use according to claim 1, **characterised in that** said anti-friction material is present in an amount in the range between 5 and 15 phr.

5. Useaccording to any of the preceding claims, **characterised in that** said resistant layer has no fluorinated plastomers.

6. Use according to any of the preceding claims, **characterised in that** said second elastomeric material comprises a substance selected from the group consisting of HNBR, XHNBR.

7. Use according to claim 6, **characterised in that** said second elastomeric material is modified with a zinc salt of an unsaturated carboxylic acid.

8. Use according to claim 7, **characterised in that** said second elastomeric material comprises HNBR modified with a zinc salt of polymethacrylic acid.

9. Use according to any of the preceding claims, **characterised in that** said second elastomeric material is formed by a mixture of one or more copolymers, obtained from a dien monomer and a nitrile group-containing monomer in which the nitrile group-containing monomers are in a percentage in the range between 30 and 39 % in weight with respect to total final copolymers.

10. Use according to any of the preceding claims, **characterised in that** said first elastomeric material is formed by a mixture of one or more copolymers obtained from a dien monomer and a nitrile group-containing monomer in which the nitrile group-containing monomers are in a percentage in the range between 30 and 39 % in weight with respect to total final copolymers.

11. Use according to any of the preceding claims, **characterised in that** said resistant layer (8) comprises an anti-friction material in an amount in weight up to 10 phr with respect to said elastomeric material.

12. Use according to claim 1, **characterised in that** said anti-friction material is molybdenum sulphide or copper powder.

13. Use according to claim 12, **characterised in that** said molybdenum sulphide is added in an amount in weight in the range between 5 and 15 parts in weight with respect to said elastomeric material.

14. Use according to any of the preceding claims, **characterised in that** said resistant layer (8) has a weight in the range between 50 and 80 g/m².

15. Use according to claim 1, **characterised in that** said vulcanisation agent is a peroxide.

16. Use according to claim 6, **characterised in that** said HNBR has an unsaturation level lower that 1%.

## Patentansprüche

1. Verwendung eines Zahnriemens in direktem Kontakt mit Öl oder teilweise eingetaucht in Öl, wobei der Zahnriemen (1) einen Körper (2), der aus einem ersten elastomeren Material, das aus einer Mischung von einem oder mehreren Copolymeren, erhalten ausgehend von einem Dien-Monomer und einem eine Nitrilgruppe enthaltenden Monomer, gebildet wird, hergestellt ist, und eine Mehrzahl von Zähnen (4) umfasst; wobei die Zähne mit einem Gewebe (5) überzogen sind; wobei das Gewebe mit einer widerstandsfähigen Lage (8) bedeckt ist, wobei die widerstandsfähige Lage (8) an das Gewebe vollständig anhaftet und bei einer Verwendung die Arbeitsoberfläche des Zahnriemens bildet und **dadurch gekennzeichnet ist, dass** die widerstandsfähige Lage (8) ein zweites elastomeres Material, das aus einer Mischung von einem oder mehreren Copolymeren, erhalten ausgehend von einem Dien-Monomer und einem eine Nitrilgruppe enthaltenden Monomer, einem Vulkanisationsmittel und einem reibungsmindernden Material gebildet wird, umfasst, wobei das reibungsmindernde Material aus der Gruppe bestehend aus Molybdänsulfid, Graphit, Kupferpulver ausgewählt ist.

2. Verwendung nach Anspruch 1, **dadurch gekennzeichnet, dass** das reibungsmindernde Material in einer Menge bis zu 100 phr vorhanden ist.

3. Verwendung nach Anspruch 1, **dadurch gekennzeichnet, dass** das reibungsmindernde Material in einer Menge im Bereich zwischen 2 und 30 phr vorhanden ist.

4. Verwendung nach Anspruch 1, **dadurch gekennzeichnet, dass** das reibungsmindernde Material in einer Menge im Bereich zwischen 5 und 15 phr vorhanden ist.

5. Verwendung nach einem der vorangegangenen Ansprüche, **dadurch gekennzeichnet, dass** die widerstandsfähige Lage keine fluorierten Plastomere aufweist.

6. Verwendung nach einem der vorangegangenen Ansprüche, **dadurch gekennzeichnet, dass** das zweite elastomere Material eine aus der Gruppe bestehend aus HNBR, XHNBR ausgewählte Substanz umfasst.

7. Verwendung nach Anspruch 6, **dadurch gekennzeichnet, dass** das zweite elastomere Material mit einem Zinksalz einer ungesättigten Carbonsäure modifiziert ist.

8. Verwendung nach Anspruch 7, **dadurch gekennzeichnet, dass** das zweite elastomere Material mit einem Zinksalz von Polymethacrylsäure modifiziertes HNBR umfasst.

9. Verwendung nach einem der vorangegangenen Ansprüche, **dadurch gekennzeichnet, dass** das zweite elastomere Material aus einer Mischung von einem oder mehreren Copolymeren, erhalten ausgehend von einem Dien-Monomer und einem eine Nitrilgruppe enthaltenden Monomer, wobei die eine Nitrilgruppe enthaltenden Monomere in einem Prozentsatz im Bereich zwischen 30 und 39 Gew.-% in Bezug auf die gesamten endgültigen Copolymere vorhanden sind, gebildet wird.

10. Verwendung nach einem der vorangegangenen Ansprüche, **dadurch gekennzeichnet, dass** das erste elastomere Material aus einer Mischung von einem oder mehreren Copolymeren, erhalten ausgehend von einem Dien-Monomer und einem eine Nitrilgruppe enthaltenden Monomer, wobei die eine Nitrilgruppe enthaltenden Monomere in einem Prozentsatz im Bereich zwischen 30 und 39 Gew.-% in Bezug auf die gesamten endgültigen Copolymere vorhanden sind, gebildet wird.

11. Verwendung nach einem der vorangegangenen Ansprüche, **dadurch gekennzeichnet, dass** die widerstandsfähige Lage (8) ein reibungsminderndes Material in einer auf das Gewicht bezogenen Menge von bis zu 10 phr in Bezug auf das elastomere Material umfasst.

12. Verwendung nach Anspruch 1, **dadurch gekennzeichnet, dass** das reibungsmindernde Material Molybdänsulfid oder Kupferpulver ist.

13. Verwendung nach Anspruch 12, **dadurch gekennzeichnet, dass** das Molybdänsulfid in einer auf das Gewicht bezogenen Menge im Bereich zwischen 5 und 15 Gewichtsteilen in Bezug auf das elastomere Material hinzugefügt wird.

14. Verwendung nach einem der vorangegangenen Ansprüche, **dadurch gekennzeichnet, dass** die widerstandsfähige Lage (8) ein Gewicht im Bereich zwischen 50 und 80 g/m² aufweist.

15. Verwendung nach Anspruch 1, **dadurch gekennzeichnet, dass** das Vulkanisationsmittel ein Peroxid ist.

16. Verwendung nach Anspruch 6, **dadurch gekennzeichnet, dass** das HNBR einen Ungesättigtheitsgrad unter 1 % aufweist.

## Revendications

1. Utilisation d'une courroie dentée en contact direct avec de l'huile ou partiellement immergée dans de l'huile, ladite courroie dentée (1) comprenant un corps (2) réalisé dans un premier matériau élastomère formé par un mélange d'un ou de plusieurs copolymères obtenus à partir d'un monomère diène et d'un monomère contenant un groupe nitrile, et une pluralité de dents (4) ; lesdites dents étant revêtues d'un tissu (5) ; ledit tissu étant recouvert d'une couche résistante (8), ladite couche résistante (8) adhérant totalement au tissu et formant en utilisation la surface de travail de la courroie dentée,
**caractérisée en ce que** ladite couche résistante (8) comprend un second matériau élastomère formé par un mélange d'un ou de plusieurs copolymères obtenus à partir d'un monomère diène et d'un monomère contenant un groupe nitrile, un agent de vulcanisation et un matériau antifriction ; ledit matériau antifriction étant choisi dans le groupe constitué du sulfure de molybdène, du graphite et de la poudre de cuivre.

2. Utilisation selon la revendication 1, **caractérisée en ce que** ledit matériau antifriction est présent dans une quantité inférieure ou égale à 100 phr.

3. Utilisation selon la revendication 1, **caractérisée en ce que** ledit matériau antifriction est présent dans une quantité comprise entre 2 et 30 phr.

4. Utilisation selon la revendication 1, **caractérisée en ce que** ledit matériau antifriction est présent dans une quantité comprise entre 5 et 15 phr.

5. Utilisation selon l'une quelconque des revendications précédentes, **caractérisée en ce que** ladite couche résistante ne comporte pas de plastomères fluorés.

6. Utilisation selon l'une quelconque des revendications précédentes, **caractérisée en ce que** ledit second matériau élastomère comprend une substance choisie dans le groupe constitué du caoutchouc nitrile hydrogéné (HNBR) et du caoutchouc nitrile hydrogéné carboxylé (XHNBR).

7. Utilisation selon la revendication 6, **caractérisée en ce que** ledit second matériau élastomère est modifié avec un sel de zinc d'un acide carboxylique non saturé.

8. Utilisation selon la revendication 7, **caractérisée en ce que** ledit second matériau élastomère comprend du caoutchouc nitrile hydrogéné (HNBR) modifié avec un sel de zinc d'acide polyméthacrylique.

9. Utilisation selon l'une quelconque des revendications précédentes, **caractérisée en ce que** ledit second matériau élastomère est formé par un mélange d'un ou de plusieurs copolymères obtenus à partir d'un monomère diène et d'un monomère contenant un groupe nitrile, dans lequel les monomères contenant un groupe nitrile sont présents dans un pourcentage de poids compris entre 30 et 39 % par rapport au total des copolymères finaux.

10. Utilisation selon l'une quelconque des revendications précédentes, **caractérisée en ce que** ledit premier matériau élastomère est formé par un mélange d'un ou de plusieurs copolymères obtenus à partir d'un monomère diène et d'un monomère contenant un groupe nitrile, dans lequel les monomères contenant un groupe nitrile sont présents dans un pourcentage de poids compris entre 30 et 39 % par rapport au total des copolymères finaux.

11. Utilisation selon l'une quelconque des revendications précédentes, **caractérisée en ce que** ladite couche résistante (8) comprend un matériau antifriction dans une quantité en poids inférieure ou égale à 10 phr par rapport audit matériau élastomère.

12. Utilisation selon la revendication 1, **caractérisée en ce que** ledit matériau antifriction est du sulfure de molybdène ou de la poudre de cuivre

13. Utilisation selon la revendication 12, **caractérisée en ce que** ledit sulfure de molybdène est ajouté dans une quantité en poids comprise entre 5 et 15 parts de poids par rapport audit matériau élastomère.

14. Utilisation selon l'une quelconque des revendications précédentes, **caractérisée en ce que** ladite couche résistante (8) possède un poids compris entre 50 et 80 g/m².

15. Utilisation selon la revendication 1, **caractérisée en ce que** ledit agent de vulcanisation est un peroxyde.

16. Utilisation selon la revendication 6, **caractérisée en ce que** ledit caoutchouc nitrile hydrogéné (HNBR) possède un degré d'insaturation inférieur à 1%.
